# EUROPÄISCHE PATENTANMELDUNG

(11) **EP 3 767 822 A1**
(43) Veröffentlichungstag der Anmeldung: **20.01.2021**
(21) Anmeldenummer: 20180214.7
(22) Anmeldetag: 16.06.2020
(51) Int. Cl.: H02P 29/032, B65G 54/02, H02P 29/60

(54) **VERFAHREN UND VORRICHTUNG ZUM TRANSPORTIEREN**

(30) Priorität: 18.07.2019 DE 102019119497
(71) Anmelder: KRONES AG, 93073 Neutraubling (DE)
(72) Erfinder: Neubauer, Michael, 93073 Neutraubling (DE)
(74) Vertreter: v. Bezold & Partner Patentanwälte - PartG mbB

(57) **Zusammenfassung**

Die Erfindung betrifft eine Vorrichtung und mehrere Verfahren zum Transportieren. Ein Verfahren weist ein Bewegen mehrerer Transport-Bewegungsvorrichtungen (14) entlang einer Führungsbahn (22) mittels eines Linearmotorsystems auf. Ein Langstator (16) des Linearmotorsystems weist entlang eines Abschnitts der Führungsbahn (22) einen vorbestimmten Funktionsbereich auf. Das Verfahren weist ein abschnittsweises Variieren einer Magnetfelderzeugung des Langstators (16) innerhalb des vorbestimmten Funktionsbereichs (46) für einander nachfolgende Transport-Bewegungsvorrichtungen der mehreren Transport-Bewegungsvorrichtungen (14) auf. Dadurch können verschiedene Vorteile erzielt werden, wie z. B. Verlängerung der Motorlebensdauer, Verhinderung von Notabschaltungen, erhöhte Leistungsfähigkeit des Langstator-Linearmotors und/oder Ermöglichung einer geringeren Dimensionierung des Langstators (16).

## Beschreibung

### Technisches Gebiet

Die Erfindung betrifft ein Verfahren und eine Vorrichtung zum Transportieren, vorzugsweise von Behältern in einer Behälterbehandlungsanlage.

### Technischer Hintergrund

Ein aktueller Entwicklungstrend beim Transport von Behältern, wie bspw. Flaschen oder Dosen, in Anlagen und Maschinen für die Herstellung, Abfüllung und Verpackung von Getränken und flüssigen Nahrungsmitteln ist die Linearmotortechnik., z. B. in Form von Langstator-Linearmotorsystemen oder Kurzstator-Linearmotorsystemen. Bei einem Langstator-Linearsystem kann ein ortsfester Langstator mit Elektromagneten zum Bewirken einer Bewegung der mit Permanentmagneten ausgestatteten Bewegungsvorrichtungen eingesetzt werden. Bei Kurzstator-Linearmotorsystemen können hingegen die Bewegungsvorrichtungen jeweils einen durch Elektromagnete gebildeten Kurzstator aufweisen, der zum Bewegen der Bewegungsvorrichtung in magnetische Wechselwirkung mit ortsfesten Permanentmagneten treten kann.

Ein großer Vorteil der Linearmotortechnik liegt darin, dass die Bewegungsvorrichtungen bzw. Shuttles separat und unabhängig voneinander angesteuert werden können. Somit können verschiedene Geschwindigkeitsprofile abgefahren werden. Herkömmlich wird für jede Bewegungsvorrichtung das gleiche Bewegungsprofil über die Wegstrecke verwendet. Deshalb wird für alle Bewegungsvorrichtungen bspw. immer an derselben Stelle des Langstator-Linearmotorsystems beschleunigt. An dieser Stelle ist also eine große Leistung erforderlich, was auf Grund des Wirkungsgrades < 1 je nach Motorauslegung eine nicht unerhebliche Wärmeentwicklung mit sich bringt.

Die US 2015/0321857 A1 offenbart eine Einheit zum Sequenzieren und Führen von Gegenständen, bei der die Gegenstände in Chargen von einem oder mehreren Gegenständen gruppiert sind. Die Einheit umfasst einen ersten Förderer zum Befördern der Gegenstände von einer Eingabestation zu einer Ausgabestation und eine mit den Gegenständen zusammenwirkende Sequenzierungsvorrichtung, um die Chargen zu bilden und sie zur Ausgabestation zu fahren. Die Sequenzierungsvorrichtung umfasst einen zweiten Förderer, der eine Schiene und mehrere bewegliche Elemente umfasst. Die Schiene beherbergt einen Statoranker, der aus einer Vielzahl von einzeln anregbaren Magneten gebildet ist. Die beweglichen Elemente umfassen entsprechende Wagen, die entsprechende Permanentmagnete aufnehmen und unabhängig entlang der Schiene bewegt werden, indem die Magnete einzeln gesteuert werden. Die Wagen können mit unterschiedlichen Positions-, Geschwindigkeits- und Beschleunigungsprofilen entlang des Weges gefahren werden.

Nachteilig am bekannten Stand der Technik kann es sein, dass ein Langstator Bereiche mit (zu) hoher thermischer Belastung aufweisen kann. Bspw. können mehrere Bewegungsvorrichtungen, oder bei starren Verfahrprofilen sogar alle Bewegungsvorrichtungen, an den gleichen Stellen des Langstators beschleunigt oder verzögert werden. Manche Teile des Langstators können so sehr viel stärker thermisch belastet sein als andere. Insbesondere in Bereichen mit großen Beschleunigungen oder Verzögerungen herrscht ein großer Leistungsbedarf und damit verbunden eine große Wärmeentwicklung. Übersteigt diese thermische Belastung einen gewissen Wert, so können sich Probleme ergeben, wie z. B. Reduzierung der Langstatorlebensdauer, Notabschaltung durch Überhitzung temperaturkritischer Komponenten oder eine verminderte Leistungsfähigkeit des Langstator-Linearmotorsystems. Ein verwandtes Problem kann bei Kurzstator-Linearmotorsystemen auftreten, da hier immer der Kurzstator bestromt wird, wenn bspw. positiv oder negativ beschleunigt oder eine Geschwindigkeit gehalten werden soll. Der Kurzstator kann sich bspw. bei vielen aufeinanderfolgenden Beschleunigungsvorgängen ungewünscht stark erhitzen.

Der Erfindung liegt die Aufgabe zu Grunde, eine alternative und/oder verbesserte Technik zum Transportieren mittels eines Linearmotorsystems, vorzugsweise eines Langstator-Linearmotorsystems oder eines Kurzstator-Linearmotorsystems, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft ein Verfahren zum Transportieren, vorzugsweise von Gegenständen (z. B. in Logistikzentren, zum Lebensmitteltransport, in Büchereien usw.), besonders bevorzugt von Behältern oder (Behälter-)Gebinden (z. B. Flaschen, Dosen usw.) und/oder für eine Behälterbehandlungsanlage (z. B. zum Herstellen, Reinigen, Prüfen, Abfüllen, Verschließen, Etikettieren, Gruppieren, Bedrucken und/oder Verpacken von Behältern für flüssige Medien, vorzugsweise Getränke oder flüssige Nahrungsmittel). Das Verfahren weist ein Bewegen mehrerer Transport-Bewegungsvorrichtungen entlang einer Führungsbahn (z. B. Führungsschiene, Führungsnut, Fahrbahn usw.) mittels eines Linearmotorsystems auf (z. B. mittels mindestens eines Führungselements je Transport-Bewegungsvorrichtung). Ein Langstator des Linearmotorsystems weist entlang eines Abschnitts der Führungsbahn einen (z. B. steuerungstechnisch) vorbestimmten Funktionsbereich (z. B. positiven oder negativen Beschleunigungsbereich oder Geschwindigkeits-Halte-Bereich) auf, in dem eine dem vorbestimmten Funktionsbereich zugeordnete Funktion bezüglich einer Beeinflussung der mehreren Transport-Bewegungsvorrichtungen ausgeführt wird. Das Verfahren weist ein abschnittsweises Variieren einer Magnetfelderzeugung des Langstators (z. B. durch abschnittsweises unterschiedliches Bestromen des Langstators) innerhalb des vorbestimmten Funktionsbereichs für einander (z. B. unmittelbar oder mittelbar) nachfolgende Transport-Bewegungsvorrichtungen der mehreren Transport-Bewegungsvorrichtungen auf, sodass vorzugsweise eine thermische Belastung des Langstators innerhalb des vorbestimmten Funktionsbereichs zumindest abschnittsweise verringert wird.

Vorzugsweise kann das Verfahren ermöglichen, dass es zu keiner punktuell wirkenden erhöhten thermischen Belastung des Langstators kommt. Stattdessen kann eine zuvor nur punktuell ausgeführte Funktion auf den extra hierfür vorbestimmten Funktionsbereich ausgedehnt werden. Für einander nachfolgende Transport-Bewegungsvorrichtungen wird die Funktion in zumindest teilweise unterschiedlichen Abschnitten des vorbestimmten Funktionsbereichs bewirkt. Die der Funktion zugehörige thermische Belastung des Langstators kann somit zweckmäßig auf den gesamten vorbestimmten Funktionsbereich aufgeteilt werden, statt nur punktuell oder in einem einzigen, vergleichsweise kurzen Abschnitt zu wirken. In anderen Worte, das Verfahren kann ein abschnittsweises Verringern einer thermischen Belastung des Langstators innerhalb des vorbestimmten Funktionsbereichs durch abschnittsweises Variieren der Magnetfelderzeugung innerhalb des vorbestimmten Funktionsbereichs für einander nachfolgende Transport-Bewegungsvorrichtungen der mehreren Transport-Bewegungsvorrichtungen aufweisen. Dadurch können verschiedene Vorteile erzielt werden, wie z. B. Verlängerung der Motorlebensdauer, Verhinderung von Notabschaltungen durch Überhitzen temperaturkritischer Komponenten des Langstator-Linearmotorsystems, erhöhte Leistungsfähigkeit des Langstator-Linearmotorsystems und/oder Ermöglichung einer geringeren Auslegung des Langstators.

In einem Ausführungsbeispiel ist der vorbestimmte Funktionsbereich ein vorbestimmter Beschleunigungsbereich, in dem die mehreren Transport-Bewegungsvorrichtungen, vorzugsweise positiv oder negativ, beschleunigt werden. Alternativ kann der vorbestimmte Funktionsbereich ein vorbestimmter Geschwindigkeits-Halte-Bereich sein, in dem die eine Geschwindigkeit der mehreren Transport-Bewegungsvorrichtungen im Wesentlichen gehalten wird.

In einem weiteren Ausführungsbeispiel wird die Magnetfelderzeugung derart abschnittsweise variiert, dass die dem vorbestimmten Bereich zugeordnete Funktion (z. B. positives Beschleunigen, negatives Beschleunigen, Geschwindigkeit-Halten usw.) beibehalten wird.

In einem weiteren Ausführungsbeispiel wird die Magnetfelderzeugung derart abschnittsweise variiert, dass eine thermische Belastung des Langstators innerhalb des vorbestimmten Funktionsbereichs verteilt wird, vorzugsweise im Wesentlichen gleichmäßig und/oder zwischen unterschiedlichen Abschnitten des vorbestimmten Funktionsbereichs. Zweckmäßig können so alle Abschnitte thermisch gering belastet werden, anstatt dass nur ein einziger Abschnitt thermisch hoch belastet wird.

Zweckmäßig kann in im Wesentlichen allen Abschnitten des vorbestimmten Funktionsbereichs ein Magnetfeld zum Bewegen der einander nachfolgenden Transport-Bewegungsvorrichtungen erzeugt werden.

In einer Ausführungsform weist der vorbestimmte Funktionsbereich mehrere Abschnitte (z. B. entlang der Führungsbahn beabstandete oder versetzte und/oder miteinander zumindest teilweise überlappende Abschnitte) auf. Vorzugsweise kann die Magnetfelderzeugung derart abschnittsweise variiert werden, dass eine Temperatur, eine Leistungsabgabe, eine Wärmeerzeugung und/oder eine thermische Belastung des Langstators in den mehreren Abschnitten jeweils unterhalb von einem Grenzwert (z. B. Temperatur-Grenzwert, Leistungsabgabe-Grenzwert, Wärmeerzeugung-Grenzwert, thermische Belastung-Grenzwert) bleibt. Alternativ oder zusätzlich kann eine Temperatur, eine Leistungsabgabe, eine Wärmeerzeugung und/oder eine thermische Belastung des Langstators in den mehreren Abschnitten zumindest teilweise vergleichmäßigt werden.

Zweckmäßig kann die Temperatur, die Leistungsabgabe, die Wärmeerzeugung und/oder die thermische Belastung des Langstators in den einzelnen Abschnitten geschätzt, berechnet und/oder, z. B. mit geeigneter Sensorik, erfasst werden.

In einer weiteren Ausführungsform weist der vorbestimmte Funktionsbereich mehrere Abschnitte auf, und die Magnetfelderzeugung wird derart abschnittsweise variiert, dass die mehreren Abschnitte jeweils abwechselnd die größte Magnetfelderzeugung und/oder die kleinste Magnetfelderzeugung übernehmen (z. B. jeweils für eine vorbestimmte Zeitdauer). Alternativ oder zusätzlich können bspw. die mehreren Abschnitte jeweils abwechselnd die größte Leistungsabgabe und/oder die kleinste Leistungsabgabe aufweisen (z. B. jeweils für eine vorbestimmte Zeitdauer). Da die Magnetfelderzeugung und die Leistungsabgabe mit der thermischen Belastung korreliert, kann so eine thermische Belastung auf die Abschnitte verteilt werden. Zweckmäßig können alle Abschnitte abwechselnd eine temporäre niedrige thermische Belastung aufgrund der kleinsten Magnetfelderzeugung / der kleinsten Leistungsabgabe zum Abkühlen erfahren. Zudem können alle Abschnitt abwechselnd eine nur temporäre hohe thermische Belastung aufgrund der größten Magnetfelderzeugung / der größten Leistungsabgabe erfahren, um die mit der hohen thermischen Belastung verbundenen Nachteile nach Möglichkeit nicht oder kaum zu verwirklichen.

In einer weiteren Ausführungsform weist der vorbestimmte Funktionsbereich mehrere Abschnitte auf, und die Magnetfelderzeugung wird derart abschnittsweise variiert, dass die Variation der Magnetfelderzeugung in den mehreren Abschnitte (z. B. dynamisch) wandert, vorzugweise rolliert und/oder abwechselnd sukzessive in einer Richtung zu einem Ende des vorbestimmten Funktionsbereichs und in einer Richtung zu einem Anfang des vorbestimmten Funktionsbereichs erfolgt. Es ist möglich, dass die Variation der Magnetfelderzeugung in den mehreren Abschnitten in einer vorbestimmten Reihenfolge erfolgt. Dies kann bspw. sicherstellen, dass alle Abschnitte zur Aufteilung der thermischen Belastung in dem vorbestimmten Funktionsbereich beitragen.

In einer Ausführungsform ist eine Geschwindigkeit der mehreren Transport-Bewegungsvorrichtungen an einem Anfang des vorbestimmten Funktionsbereichs im Wesentlichen gleich, und/oder eine Geschwindigkeit der mehreren Transport-Bewegungsvorrichtungen an einem Ende des vorbestimmten Funktionsbereichs ist im Wesentlichen gleich. So kann bspw. trotz unterschiedlicher Beeinflussung der mehreren Transport-Bewegungsvorrichtungen innerhalb des vorbestimmten Funktionsbereichs gewährleistet werden, dass schlussendlich alle Transport-Bewegungsvorrichtungen am Ende die gleiche Geschwindigkeit aufweisen.

In einer Ausführungsvariante wird die Magnetfelderzeugung derart abschnittsweise variiert, dass die einander nachfolgendenden Transport-Bewegungsvorrichtungen in jeweils unterschiedlichen Abschnitten des vorbestimmten Funktionsbereichs (z. B. positiv oder negativ) beschleunigt werden. Es ist möglich, dass die einander nachfolgendenden Transport-Bewegungsvorrichtungen deren jeweils stärkste (z. B. positive oder negative) Beschleunigung in jeweils unterschiedlichen Abschnitten des vorbestimmten Funktionsbereichs erfahren.

Zweckmäßig können die einander nachfolgendenden Transport-Bewegungsvorrichtungen jeweils nur in einem oder einigen Abschnitten des vorbestimmten Funktionsbereichs beschleunigt werden. Alternativ können die einander nachfolgendenden Transport-Bewegungsvorrichtungen bspw. in allen Abschnitten des vorbestimmten Funktionsbereichs beschleunigt werden, wobei sie jedoch zumindest teilweise jeweils unterschiedlich stark in den einzelnen Abschnitten beschleunigt werden.

In einer weiteren Ausführungsvariante wird die Magnetfelderzeugung derart abschnittsweise variiert, dass die einander nachfolgenden Transport-Bewegungsvorrichtungen in dem vorbestimmten Funktionsbereich zumindest teilweise unterschiedliche, wegbezogene Beschleunigungsprofile aufweisen.

In einem Ausführungsbeispiel ist der vorbestimmte Funktionsbereich durch mehrere, aufeinanderfolgende Langstatorsegmente des Langstators gebildet, und jedes Langstatorsegment bildet einen jeweiligen Abschnitt des vorbestimmten Funktionsbereichs. Somit kann die thermische Belastung jeweils zwischen den Langstatorsegmenten aufgeteilt werden.

Zweckmäßig können die Langstatorsegmente separate Bauteile sein und/oder angrenzend aneinander entlang der Führungsbahn angeordnet sein.

In einem Ausführungsbeispiel ist der vorbestimmte Funktionsbereich ein für die mehreren Transport-Bewegungsvorrichtungen gemeinsam vorbestimmter Funktionsbereich.

In einem weiteren Ausführungsbeispiel weist der vorbestimmte Funktionsbereich einen vorbestimmten Anfang, ein vorbestimmtes Ende, eine vorbestimmte Position, eine vorbestimmte Länge und/oder einen vorbestimmten Verlauf auf.

In einer Ausführungsform wird die Magnetfelderzeugung derart abschnittsweise variiert, dass eine thermische Überbelastung eines Abschnitts oder aller Abschnitte des Langstators innerhalb des vorbestimmten Funktionsbereichs hinausgezögert oder ausgeschlossen ist.

Bspw. kann hierin unter einer thermischen Überbelastung eine Situation verstanden werden, bei der der Abschnitt des Langstators außerhalb von dessen zulässigen Betriebsgrenzen betrieben wird und/oder es zu einer Notabschaltung des Abschnitts des Langstators kommt.

In einer weiteren Ausführungsform weist der vorbestimmte Funktionsbereich eine erhöhte thermische Belastung und/oder einen erhöhten Leistungsbedarf aufgrund der Magnetfelderzeugung des Langstators zur Wechselwirkung mit den mehreren Transport-Bewegungsvorrichtungen auf (z. B. zum positiven oder negativen Beschleunigen der mehreren Transport-Bewegungsvorrichtungen).

Zweckmäßig kann hierin unter einem Bereich mit einer erhöhten thermischen Belastung/Wärmeentwicklung ein Bereich verstanden werden, der im Vergleich mit den übrigen (Funktions-)Bereichen des Langstators eine höhere thermische Belastung und/oder einen größeren Leistungsbedarf aufweist. Bspw. kann die thermische Belastung und/oder der Leistungsbedarf größer als der Durchschnitt (z. B. arithmetisches Mittel, Median usw.) der thermischen Belastungen bzw. der Leistungsbedarfe der übrigen (Funktions-)Bereiche des Langstators sein.

Es ist bspw. möglich, dass der vorbestimmte Funktionsbereich bspw. einen ersten Abschnitt, einen zweiten Abschnitt und optional einen dritten Abschnitt aufweist. Eine erste Transport-Bewegungsvorrichtung kann lediglich in dem ersten Abschnitt beschleunigt werden. Eine zweite Transport-Bewegungsvorrichtung kann lediglich im zweiten Abschnitt beschleunigt werden. Eine optionale dritte Transport-Bewegungsvorrichtung kann lediglich in dem dritten Abschnitt beschleunigt werden. Alternativ kann bspw. die erste Transport-Bewegungsvorrichtung am stärksten im ersten Abschnitt beschleunigt werden, die zweite Transport-Bewegungsvorrichtung kann am stärksten im zweiten Abschnitt beschleunigt werden, und optional kann die die dritte Transport-Bewegungsvorrichtung am stärksten im dritten Abschnitt beschleunigt werden.

Die Erfindung betrifft auch ein Verfahren zum Transportieren, vorzugsweise von Gegenständen (z. B. in Logistikzentren, zum Lebensmitteltransport, in Büchereien usw.), besonders bevorzugt von Behältern oder (Behälter-)Gebinden (z. B. Flaschen, Dosen usw.) und/oder für eine Behälterbehandlungsanlage (z. B. zum Herstellen, Reinigen, Prüfen, Abfüllen, Verschließen, Etikettieren, Gruppieren, Bedrucken und/oder Verpacken von Behältern für flüssige Medien, vorzugsweise Getränke oder flüssige Nahrungsmittel). Das Verfahren weist ein Bewegen mindestens einer Transport-Bewegungsvorrichtung entlang einer Führungsbahn mittels eines Linearmotorsystems auf, wobei die mindestens eine Transport-Bewegungsvorrichtung einen in mehrere Abschnitte unterteilten Kurzstator des Linearmotorsystems aufweist. Das Verfahren weist ein abschnittsweises Variieren einer Magnetfelderzeugung (z. B. durch abschnittsweises unterschiedliches Bestromen) über die mehreren Abschnitte des Kurzstators in (z. B. unmittelbar oder mittelbar) aufeinanderfolgenden Zeiträumen zum Ausführen einer gleichen Funktion bezüglich des Bewegens der mindestens einen Transport-Bewegungsvorrichtung, sodass vorzugsweise eine thermische Belastung des Kurzstators zumindest abschnittsweise verringert wird, auf. Das Verfahren kann das Erzielen gleicher oder zumindest ähnlicher Vorteile wie hierin für das Langstator-Linearmotorsystem angegeben ist, ermöglichen.

Zweckmäßig können die Abschnitte des Kurzstators bspw. entlang einer Längsrichtung, Vorwärtsfahrtrichtung und/oder Vertikalrichtung der mindestens einen Transport-Bewegungsvorrichtung beabstandet oder versetzt und/oder miteinander zumindest teilweise überlappend angeordnet sein.

In einem Ausführungsbeispiel ist die gleiche Funktion eine, vorzugsweise positive oder negative, Beschleunigungsfunktion oder einer Geschwindigkeits-Halte-Funktion.

In einem weiteren Ausführungsbeispiel sind die mehreren Abschnitte des Kurzstators unabhängig voneinander bestrombar oder bestromt.

In einem bevorzugten Ausführungsbeispiel weisen die mehreren Abschnitte einen ersten Abschnitt und einen zweiten Abschnitt auf. Vorzugsweise kann das abschnittsweise Variieren der Magnetfelderzeugung derart erfolgen, dass in aufeinanderfolgenden Zeiträumen zum Ausführen der gleichen Funktion zunächst der erste Abschnitt aktiviert und der zweite Abschnitt deaktiviert ist und später der erste Abschnitt deaktiviert und der zweite Abschnitt aktiviert ist. Alternativ oder zusätzlich kann das abschnittsweise Variieren der Magnetfelderzeugung bspw. derart erfolgen, dass in aufeinanderfolgenden Zeiträumen zum Ausführen der gleichen Funktion zunächst der erste Abschnitt stärker bestromt ist als der zweite Abschnitt und später der zweite Abschnitt stärker bestromt ist als der erste Abschnitt.

In einer Ausführungsform wird die Magnetfelderzeugung derart abschnittsweise variiert, dass mindestens eines der nachfolgenden Merkmale erfüllt ist: Eine thermische Belastung des Kurzstators wird über die mehreren Abschnitte verteilt, vorzugsweise im Wesentlichen gleichmäßig; eine Temperatur, eine Leistungsabgabe, eine Wärmeerzeugung und/oder eine thermische Belastung des Kurzstators bleibt in den mehreren Abschnitten jeweils unterhalb von einem Grenzwert; eine Temperatur, eine Leistungsabgabe, eine Wärmeerzeugung und/oder eine thermische Belastung des Kurzstators wird in den mehreren Abschnitten zumindest teilweise vergleichmäßigt; die mehreren Abschnitte übernehmen jeweils abwechselnd die größte Magnetfelderzeugung und/oder die kleinste Magnetfelderzeugung; die mehreren Abschnitte weisen jeweils abwechselnd die größte Leistungsabgabe und/oder die kleinste Leistungsabgabe auf; die Variation der Magnetfelderzeugung wandert, vorzugweise rolliert, in den mehreren Abschnitten; die Variation der Magnetfelderzeugung in den mehreren Abschnitten erfolgt in einer vorbestimmten Reihenfolge; und eine thermische Überbelastung eines Abschnitts oder aller Abschnitte des Kurzstators ist hinausgezögert oder ausgeschlossen.

Zweckmäßig kann die Temperatur, die Leistungsabgabe, die Wärmeerzeugung und/oder die thermische Belastung des Kurzstators in den einzelnen Abschnitten geschätzt, berechnet und/oder, z. B. mit geeigneter Sensorik, erfasst werden.

Die Erfindung betrifft auch eine Vorrichtung zum Transportieren, vorzugsweise Gegenständen, bevorzugt von Behältern (z. B. Flaschen, Dosen usw.) oder (Behälter-)Gebinden und/oder für eine Behälterbehandlungsanlage. Die Vorrichtung weist eine Führungsbahn und eine odermehrere Transport-Bewegungsvorrichtungen, die entlang der Führungsbahn führbar sind, auf. Die Vorrichtung weist einen Linearmotorsystem auf. Das Linearmotorsystem weist einen Langstator auf, der entlang der Führungsbahn angeordnet und zum Antreiben der mehreren Transport-Bewegungsvorrichtungen ausgebildet ist, auf. Alternativ weist das Linearmotorsystem einen oder mehrere Kurzstatoren auf, der in der einen Transport-Bewegungsvorrichtung oder die in den mehreren Transport-Bewegungsvorrichtungen zum Antreiben entlang der Führungsbahn umfasst sind. Die Vorrichtung weist eine Steuereinheit auf, die dazu eingerichtet ist, ein Verfahren zum Transportieren wie hierin offenbart auszuführen. Zweckmäßig kann die Vorrichtung die gleichen Vorteile erzielen wie das hierin offenbarte Verfahren.

In einer weiteren Ausführungsform weist die eine oder die mehreren Transport-Bewegungsvorrichtungen eine Halterung auf, die zum Halten eines (z. B. einzigen) Behälters ausgebildet ist, wobei vorzugsweise die Halterung als eine Behälterhals-Halterung oder eine Behältermantel-Halterung ausgeführt ist.

Vorzugsweise kann sich der Begriff "Steuereinheit" auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Ansicht einer Vorrichtung zum Transportieren von Behältern gemäß einem Ausführungsbeispiel der vorliegenden Offenbarung;
- Figur 2: eine schematische Ansicht einer Behälterbehandlungsanlage mit der beispielhaften Vorrichtung zum Transportieren von Behältern;
- Figur 3: eine schematische Darstellung eines Behälterstroms entlang eines vorbestimmten Funktionsbereichs der beispielhaften Vorrichtung zu unterschiedlichen Zeitpunkten;
- Figur 4: eine weitere schematische Darstellung eines Behälterstroms entlang eines vorbestimmten Funktionsbereichs der beispielhaften Vorrichtung zu unterschiedlichen Zeitpunkten; und
- Figur 5: eine schematische Ansicht einer Vorrichtung zum Transportieren von Behältern gemäß einem weiteren Ausführungsbeispiel der vorliegenden Offenbarung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

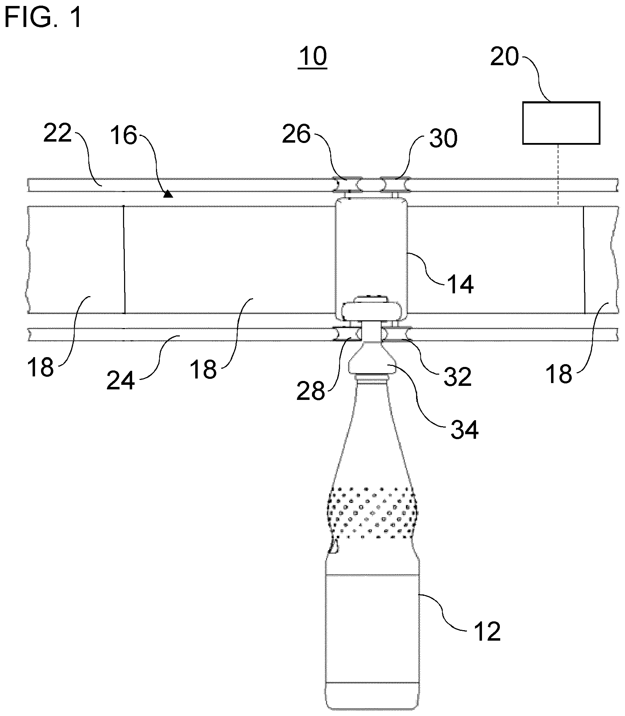

Die Figur 1 zeigt eine Vorrichtung 10 zum Transportieren von Behältern (z. B. Flaschen, Dosen, Preforms und/oder anderen Behältern) 12 oder Gebinden (Six-Packs, Four-Packs usw.) mittels mehrerer Transport-Bewegungsvorrichtungen 14. Aus Übersichtsgründen ist in Figur 1 nur ein Behälter 12 und nur eine Bewegungsvorrichtung 14 dargestellt.

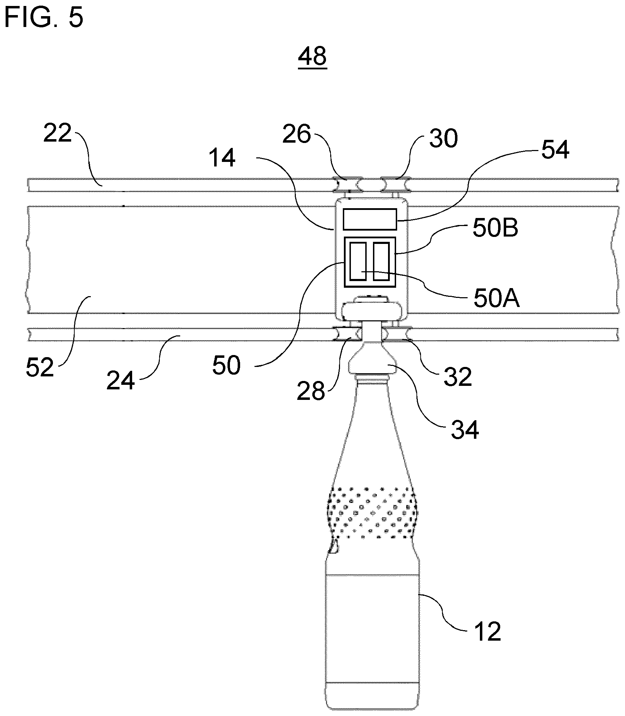

Die Transport-Bewegungsvorrichtungen 14 können mittels Langstator-Linearmotortechnik angetrieben sein. Dazu weist die Vorrichtung 10 einen Langstator 16 auf. Der Langstator 16 weist mehrere Langstatorsegmente 18 auf. Die Langstatorsegmente 18 sind nebeneinander angeordnet, vorzugsweise angrenzend aneinander. Die Langstatorsegmente 18 können mit deren Elektromagneten in magnetische Wechselwirkungen mit Permanentmagneten (nicht gesondert dargestellt) der Transport-Bewegungsvorrichtungen 14 zum Fortbewegen der Transport-Bewegungsvorrichtungen 14 treten. Der Langstator 16 mit dessen Langstatorsegmenten 18 und die Magnete der Transport-Bewegungsvorrichtungen 14 bilden somit ein sogenanntes Langstator-Linearmotorsystem. Die Langstatorsegmente 18 sind individuell mittels einer Steuereinheit 20 (nur schematisch in Figur 1 gezeigt) betreibbar. D. h., die Steuereinheit 20 kann die Langstatorsegmente 18 einzeln und unabhängig voneinander betreiben. Der Langstator 16 und die Transport-Bewegungsvorrichtungen 14 sind durch einen Luftspalt voneinander beabstandet. Alternativ kann das Linearmotorsystem bspw. auch ein Kurzstator-Linearmotorsystem sein, wie unter Bezugnahme auf Figur 5 beispielhaft beschrieben ist.

Die Figur 1 zeigt ein Ausführungsbeispiel, bei dem die Vorrichtung 10 zwei Führungsbahnen 22 und 24 aufweist. Die erste Führungsbahn 22 verläuft parallel zur zweiten Führungsbahn 24. Die erste Führungsbahn 22 ist oberhalb der zweiten Führungsbahn 24 angeordnet. Die Langstatorsegmente 18 sind zwischen den Führungsbahnen 22, 24 angeordnet. Die Langstatorsegmente 18 erstrecken sich parallel zu den Führungsbahnen 22, 24. Die Führungsbahnen 22, 24 können bspw. als Führungsschienen, Führungsnuten oder Fahrbahnen ausgeführt sein. Die Führungsbahnen 22, 24 können geradlinig oder entlang von Bahnkurven verlaufen. Die Vorrichtung 10 kann auch mehr oder weniger Führungsbahnen zur Führung der Transport-Bewegungsvorrichtungen 14 aufweisen.

Die beispielhafte Transport-Bewegungsvorrichtung 14 weist vier Führungselemente 26, 28, 30, 32 auf. Das erste Führungselement 26 kann die Transport-Bewegungsvorrichtung 14 entlang der ersten Führungsbahn 22 führen, und das zweite Führungselement 28 kann die Transport-Bewegungsvorrichtung 14 entlang der zweiten Führungsbahn 24 führen. Das dritte und vierte Führungselement 30, 32 können bspw. zur Führung entlang zweier weiterer Führungsbahnen (nicht dargestellt) bei einem Führungsbahnwechsel der Transport-Bewegungsvorrichtung 14 angeordnet sein. Beim Führungsbahnwechsel können die Führungselemente 26, 28 außer Eingriff mit den Führungsbahnen 22, 24 gelangen, und die Führungselemente 30, 32 können in Eingriff mit den zwei weiteren Führungsbahnen gelangen. Im dargestellten Ausführungsbeispiel sind die Führungselemente 26, 28, 30, 32 als drehbare Rollen ausgebildet, die auf den jeweiligen Führungsbahnen abrollen können. Es ist allerdings auch möglich, dass die Führungselemente 26, 28, 30, 32 anders ausgeführt sind, z. B. als Gleitschuhe bzw. Gleitkufen. Je nach Anzahl und Konfiguration der Führungsbahnen und abhängig von einer Konfiguration der Führungselemente kann die Transport-Bewegungsvorrichtung 14 auch mehr oder weniger Führungselemente aufweisen. Es ist auch möglich, dass mehr als ein Führungselement je Führungsbahn vorgesehen ist.

Die Transport-Bewegungsvorrichtung 14 weist eine Halterung 34 zum Halten des Behälters 12 auf. Die Halterung 34 ist als eine Behälterhals-Halterung zum Halten des Behälters 12 an dessen Behälterhals ausgeführt. Bspw. kann der Behälterhals in der Halterung 34 mittels einer Klemmhalterung geklemmt sein. Es ist allerdings auch möglich, dass die Halterung 34 anders ausgeführt ist, z. B. als eine Greifer-Halterung oder eine Saug-Halterung. Die Halterung kann bspw.am Behälterhals ("neck-handling") oder am Behälteraußenmantel ("base-handling") angreifen.

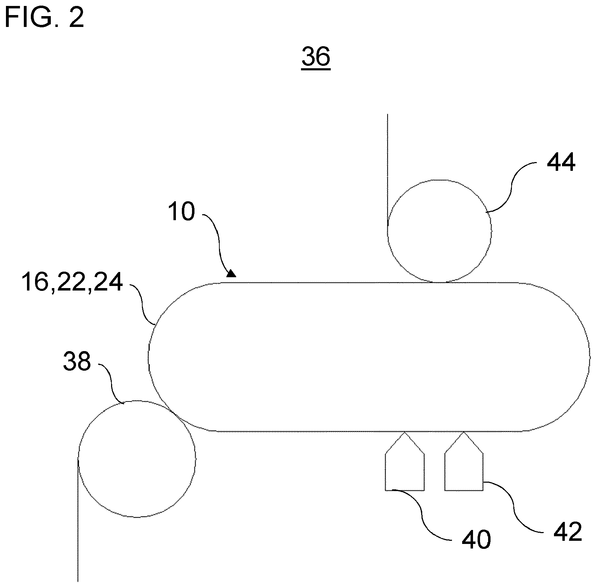

Die Figur 2 zeigt eine beispielhafte Integration der Vorrichtung 10 in einer Behälterbehandlungsanlage 36. Die Behälterbehandlungsanlage 36 ist nachfolgend unter Bezugnahme auf die Figuren 1 und 2 näher beschrieben.

Die Behälterbehandlungsanlage 36 weist einen drehbaren Einlaufstern 38, die Vorrichtung 10, Behälterbehandlungsvorrichtungen 40, 42 und einen drehbaren Auslaufstern 44 auf.

Vom Einlaufstern 38 können die Behälter an die Vorrichtung 10 übergeben werden. Die Vorrichtung 10 weist die Führungsbahnen 22, 24 auf, die geschlossen sind. Die Transport-Bewegungsvorrichtungen 14 (nicht dargestellt in Figur 2) können entlang der Führungsbahnen 22, 24 umlaufen. Die Vorrichtung 10 kann die transportierten Behälter an die Behälterbehandlungsvorrichtungen 40, 42 übergeben oder die Behälter zur Behandlung mittels der Behälterbehandlungsvorrichtungen 40, 42 anhalten. Die Behälterbehandlungsvorrichtungen 40, 42 können die Behälter bspw. reinigen, prüfen, befüllen, verschließen, etikettieren und/oder bedrucken. Stromabwärts der Behälterbehandlungsvorrichtungen 40, 42 können die Behälter von der Vorrichtung 10 bspw. an den Auslaufstern 44 übergeben werden.

Während die Behälter mittels der Transport-Bewegungsvorrichtungen 14 entlang der Führungsbahnen bewegt werden, werden sie abschnittsweise beschleunigt und verzögert. Bspw. werden die Transport-Bewegungsvorrichtungen 14 unmittelbar vor der Behälterbehandlungsvorrichtung 40 verzögert (negativ beschleunigt), um zur Behandlung an der ersten Behälterbehandlungsvorrichtung 40 zum Stillstand zu kommen. Dann kann eine kurze positive Beschleunigung mit anschließender Verzögerung der Transport-Bewegungsvorrichtungen 14 zum Erreichen der zweiten Behälterbehandlungsvorrichtung 42 folgen. Nach der zweiten Behälterbehandlungsvorrichtung 42 können die Transport-Bewegungsvorrichtungen 14 wieder beschleunigt werden und schließlich an den Auslaufstern 44 übergeben werden.

Gemäß einer herkömmlichen Technik würden alle Transport-Bewegungsvorrichtungen 14 direkt stromabwärts der zweiten Behälterbehandlungsvorrichtung 42 von dem gleichen Abschnitt des Langstators 16 beschleunigt werden. In diesem Abschnitt müsste der Langstator 16 somit eine große Leistung aufbringen. Insbesondere wenn die Behälter zuvor durch eine der Behälterbehandlungsvorrichtungen 40, 42 befüllt wurden und die Behältermasse somit größer geworden ist, ist eine hohe Leistung erforderlich. Die große Leistung in diesem Abschnitt würde zu einer ungewünschten, großen Wärmeentwicklung in diesem Abschnitt führen, die bspw. eine Lebensdauer des Langstators 16 in diesem Abschnitt negativ beeinflussen kann.

Die vorliegende Offenbarung schlägt zur Verhinderung oder zumindest Abmilderung des rein beispielhaften obigen Szenarios allgemein vor, in Abschnitten des Langstators 16 mit erhöhter thermischer Belastung eine dynamische Verlagerung der beanspruchten Abschnitte für einander nachfolgende Transport-Bewegungsvorrichtungen vorzunehmen. Zweckmäßig wird dem Abschnitt mit erhöhter thermischer Belastung ein vorbestimmter Funktionsbereich des Langstators 16 zugeordnet, in dem eine bestimmte Funktion bezüglich der Transport-Bewegungsvorrichtungen 14 zu erfüllen ist, z. B. Beschleunigen der Transport-Bewegungsvorrichtungen. Innerhalb dieses vorbestimmten Funktionsbereichs wird gemäß der Technik der vorliegenden Offenbarung eine Magnetfelderzeugung in unterschiedlichen Abschnitten des vorbestimmten Funktionsbereichs für einander nachfolgende Transport-Bewegungsvorrichtungen 14 variiert. Die Variation kann dabei derart erfolgen, dass die dem vorbestimmten Funktionsbereich zugeordnete Funktion erhalten bleibt.

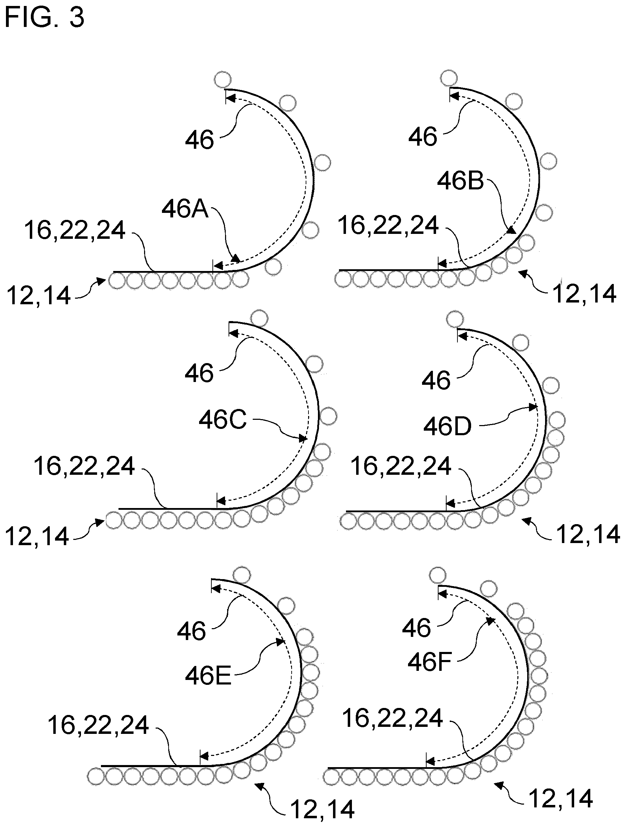

Die Technik ist nachfolgend unter Bezugnahme auf Figur 3 näher beschrieben. Die Technik kann als ein Verfahren oder eine Vorrichtung umgesetzt werden. Die Figur 3 zeigt einen Ausschnitt aus der Figur 2, nämlich einen Bereich der Vorrichtung 10 zwischen der zweiten Behälterbehandlungsvorrichtung 42 und dem Auslaufstern 44, zu unterschiedlichen Zeitpunkten. Die Kombination von jeweils einer Transport-Bewegungsvorrichtung 14 mit dem jeweiligen Behälter 12 ist als ein Kreis dargestellt.

Der Langstator 16 weist einen vorbestimmten Funktionsbereich 46 auf, der zwischen der Behälterbehandlungsvorrichtung 42 (siehe Figur 2) und dem Auslaufstern 44 (siehe Figur 2) angeordnet ist. Der vorbestimmte Funktionsbereich 46 kann einen vorbestimmt Anfang, ein vorbestimmtes Ende, eine vorbestimmte Länge, eine vorbestimmte Position und/oder einen vorbestimmten Verlauf aufweisen. Am vorbestimmten Anfang und/oder am vorbestimmten Ende können bspw. alle Transport-Bewegungsvorrichtungen 14 die im Wesentlichen gleiche Geschwindigkeit aufweisen. Der vorbestimmte Funktionsbereich 46 kann zweckmäßig für alle Transport-Bewegungsvorrichtungen 14 gelten.

Dem vorbestimmten Funktionsbereich 46 ist die Funktion "Beschleunigen" zugeordnet, da die Behälter 12 bis zum Auslaufstern 44 beschleunigt werden sollen. Innerhalb des vorbestimmten Funktionsbereichs 46 werden nur für einander nachfolgende Transport-Bewegungsvorrichtungen 14 mit den Behältern 12 jeweils andere Abschnitte zur Beschleunigung der Transport-Bewegungsvorrichtungen 14 genutzt. Allgemein formuliert, die Magnetfelderzeugung wird innerhalb des vorbestimmten Funktionsbereichs 46 für einander nachfolgende Transport-Bewegungsvorrichtungen 14 abschnittsweise variiert. Zweckmäßig kann so eine thermische Belastung des Langstators 16 innerhalb des vorbestimmten Funktionsbereichs 46 zumindest abschnittsweise verringert werden. Die abschnittsweise Magnetfeldvariation erfolgt dabei so, dass die dem vorbestimmten Funktionsbereich 46 zugeordnete Funktion "Beschleunigen" erhalten bleibt. Es wird lediglich jeweils in unterschiedlichen Abschnitten des vorbestimmten Funktionsbereichs 46 beschleunigt.

Ausgehend von oben links in Figur 3 werden die Transport-Bewegungsvorrichtungen 14 mit den Behältern 12 bereits in einem Abschnitt 46A am Anfang des vorbestimmten Funktionsbereichs 46 beschleunigt. Die relativ große Teilung / der relativ große Relativabstand zwischen den einzelnen Transport-Bewegungsvorrichtungen 14 mit den Behältern 12 innerhalb des gesamten vorbestimmten Funktionsbereichs 46 deutet an, dass die Transport-Bewegungsvorrichtungen 14 bereits kurz nach dem Anfang des vorbestimmten Funktionsbereichs 46 mit relativ großer Geschwindigkeit bewegt werden. Zu einem späteren Zeitpunkt (oben rechts in Figur 3) werden die Transport-Bewegungsvorrichtungen 14 erst in einem bezüglich des Behälterstroms stromabwärts angeordneten Abschnitt 46B beschleunigt. Zunächst hat also der Abschnitt 46A eine relativ große thermische Belastung aufgrund der Beschleunigung der Transport-Bewegungsvorrichtungen 14 erfahren. Danach wird der Abschnitt 46A entlastet, da er nicht mehr zur Beschleunigung verwendet wurde. Stattdessen erfolgt die Beschleunigung im Abschnitt 46B, der demzufolge eine höhere thermische Belastung erfährt. Zu einem späteren Zeitpunkt erfolgt die Beschleunigung der Transport-Bewegungsvorrichtungen 14 in einem der Abschnitte 46C, 46D, 46E und 46F (siehe mittlere und untere Reihe in Figur 3). Der Beschleunigungsabschnitt wandert bzw. rolliert dynamisch nacheinander durch die Abschnitte 46A-46F (und z. B. zum erneuten Starten wieder zurück). Zweckmäßig kann eine Reihenfolge, in der die Abschnitte zur Beschleunigung verwendet werden, vorbestimmt sein. Die Transport-Bewegungsvorrichtungen 14 weisen somit zumindest teilweise unterschiedliche, wegbezogene Beschleunigungsprofile innerhalb des vorbestimmten Funktionsbereichs 46 auf. Die Abschnitte 46A-46F übernehmen abwechselnd die größte Magnetfelderzeugung. Dadurch kann eine thermische Belastung des Langstators 16 innerhalb des vorbestimmten Funktionsbereichs 46 auf die Abschnitte 46A-46F aufgeteilt werden. Bspw. kann der Langstator 16 von der Steuereinheit 20 (siehe Figur 1) so betrieben werden, dass die thermische Belastung des Langstators 16 bezüglich der Abschnitte 46A-46F vergleichmäßigt wird.

Zweckmäßig kann der Langstator 16 mit dem Betriebsziel betrieben werden, eine Überbelastung eines Abschnitts oder aller Abschnitte des Langstators 16 innerhalb des vorbestimmten Funktionsbereichs 46 auszuschließen oder zumindest soweit wie möglich hinauszuzögern. Hierzu kann bspw. der Langstator 16 so betrieben werden, dass mindestens ein abschnittsspezifischer Parameter erfasst oder geschätzt und der Betrieb des Langstators 16 so angepasst wird, dass der Parameter einen Grenzwert nicht überschreitet. Beispiele für geeignete Parameter sind Abschnittstemperatur, Abschnittsleistungsabgabe, Abschnittswärmeerzeugung und/oder eine thermische Belastung des jeweiligen Abschnitts.

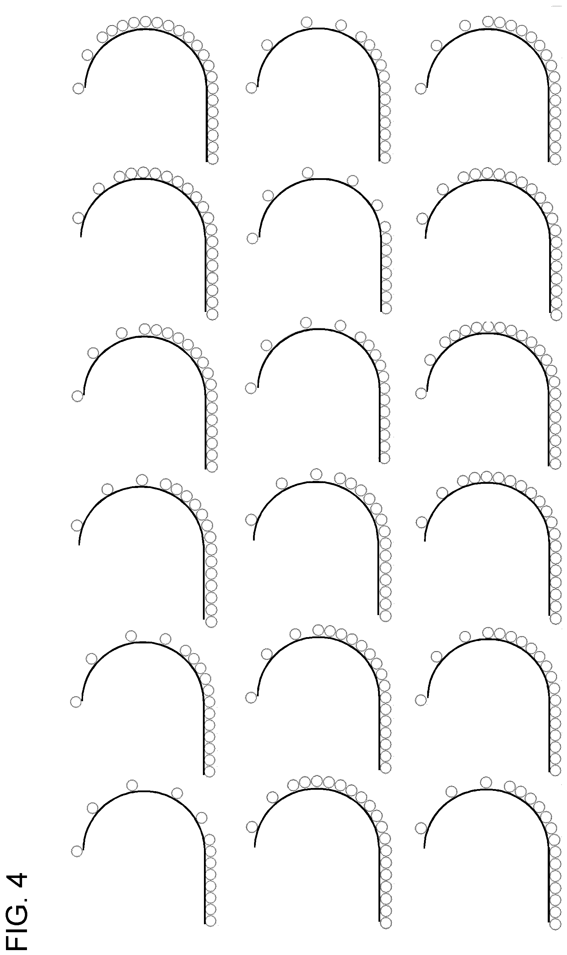

Aus Gründen der Übersichtlichkeit sind in Figur 4 keine Bezugszeichen enthalten. Die Darstellungsweise und die verwendeten Symbole sind jedoch zum besseren Verständnis an die Figur 3 angelehnt. Die Figur 4 zeigt für eine Vielzahl von unterschiedlichen Zeitpunkten, dass die Transport-Bewegungsvorrichtungen jeweils in unterschiedlichen Abschnitten innerhalb des vorbestimmten Bereichs beschleunigt werden können. Bspw. kann der Beschleunigungsabschnitt zunächst sukzessive nach hinten in Richtung zu dem Ende des vorbestimmten Funktionsbereichs verlagert werden (obere Reihe). Danach kann der Beschleunigungsabschnitt wieder sukzessive in Richtung zu dem Anfang des vorbestimmten Funktionsbereichs verlagert werden (mittlere Reihe) und danach wieder sukzessive in Richtung des Endes (untere Reihe) usw.

Obenstehend wurde ein Ausführungsbeispiel beschrieben, bei dem der vorbestimmte Funktionsbereich ein Bereich zum positiven Beschleunigen der Transport-Bewegungsvorrichtungen 14 ist. Es ist auch möglich, dass der vorbestimmte Funktionsbereich eine andere Funktion aufweist, z. B. Verzögerung (negative Beschleunigung) der Transport-Bewegungsvorrichtungen 14 oder Halten einer Geschwindigkeit der Transport-Bewegungsvorrichtungen 14. Die Führungsbahnen 22, 24 können im vorbestimmten Funktionsbereichs 46 jeglichen Verlauf aufweisen, z. B. geradlinig oder bahnkurvenförmig.

Bspw. kann der vorbestimmte Funktionsbereich 46 bezüglich eines Behälterstroms (z. B. direkt) stromabwärts von einer Behälterherstellvorrichtung, z. B. Behälterblasmaschine, der Behälterbehandlungsanlage 36, (z. B. direkt) stromabwärts eines Teilungsverzugssterns der Behälterherstellvorrichtung oder (z. B. direkt) stromaufwärts von einer Etikettiervorrichtung der Behälterbehandlungsanlage 36 angeordnet sein.

Die Figur 5 zeigt eine weitere Vorrichtung 48 zum Transportieren von Behältern (z. B. Flaschen, Dosen und/oder anderen Behältern) 12 mittels mehrerer Transport-Bewegungsvorrichtungen 14. Aus Übersichtsgründen ist in Figur 5 wieder nur ein Behälter 12 und nur eine Bewegungsvorrichtung 14 dargestellt.

Das Ausführungsbeispiel von Figur 5 unterscheidet sich von dem Ausführungsbeispiel von Figur 1 darin, dass statt eines Langstator-Linearmotorsystems ein Kurzstator-Linearmotorsystem verwendet wird, um die Transport-Bewegungsvorrichtung 14 anzutreiben bzw. fortzubewegen.

Die Transport-Bewegungsvorrichtung 14 weist einen Kurzstator 50 auf. Der Kurzstator 50 weist mindestens zwei Abschnitte 50A, 50B auf, die zweckmäßig unabhängig voneinander ansteuerbar bzw. bestrombar sind. Es können auch mehr als zwei Abschnitte umfasst sein. Die Abschnitte 50A, 50B können in magnetische Wechselwirkung mit entlang der Führungsbahn 22 und/oder 24 angeordneten Permanentmagneten 52 treten, um die Transport-Bewegungsvorrichtung 14 anzutreiben. Die Abschnitte 50A, 50B sind entlang einer Längsrichtung bzw. einer Vorwärtsfahrtrichtung der Transport-Bewegungsvorrichtung 14 beabstandet oder versetzt zueinander angeordnet. Es ist auch möglich, dass die Abschnitte 50A, 50B entlang einer Höhenrichtung der Transport-Bewegungsvorrichtung 14 bzw. einer Vertikalrichtung beabstandet oder versetzt zueinander angeordnet Die Abschnitte 50A, 50B können sich bspw. auch zumindest teilweise überlappen.

Um eine übermäßige Erhitzung des Kurzstators 50 zu verhindern, können die Abschnitte 50A, 50B bspw. abwechselnd zum positiven oder negativen Beschleunigen oder zum Halten einer Geschwindigkeit der Transport-Bewegungsvorrichtung 14 bestromt bzw. aktiviert und deaktiviert werden. Es ist auch möglich, dass die Abschnitte 50A und 50B abwechselnd unterschiedlich stark bestromt werden. Die Bestromung kann bspw. durch eine Steuereinheit 54 der Transport-Bewegungsvorrichtung 14 gesteuert sein. Die Steuereinheit 54 kann auch zentral für mehrere Bewegungsvorrichtungen 14 vorgesehen sein.

Beispielsweise kann auf einer z. B. langen Beschleunigungstrecke (oder Geschwindigkeits-Halte-Strecke) zunächst nur der erste Abschnitt 50A aktiviert sein oder der erste Abschnitt 50A stärker bestromt sein. Anschließend kann nur der zweite Abschnitt 50B noch auf derselben Beschleunigungsstrecke (oder Geschwindigkeits-Halte-Strecke) aktiviert sein oder der zweite Abschnitt 50B stärker bestromt sein. Es ist auch möglich, dass auf einer ersten Beschleunigungsstrecke oder Geschwindigkeits-Halte-Strecke nur der erste Abschnitt 50A aktiviert ist oder der erste Abschnitt 50A stärker bestromt ist. Auf einer nachfolgenden zweiten Beschleunigungsstrecke oder Geschwindigkeits-Halte-Strecke ist dann bspw. nur der zweite Abschnitt 50b aktiviert, oder der zweite Abschnitt 50B ist stärker bestromt.

Die Bestromung bzw. Ansteuerung der Abschnitte 50A, 50B kann bspw. analog zum Ausführungsbeispiel der Figuren 1 bis 4 erfolgen. Bspw. kann eine Bestromung der Abschnitte 50A, 50B wandern bzw. rollieren und dynamisch nacheinander erfolgen. Zweckmäßig kann eine Reihenfolge, in der die Abschnitte 50A, 50B zum Beschleunigen oder Geschwindigkeit-Halten verwendet werden, vorbestimmt sein. Die Abschnitte 50A, 50B können bspw. abwechselnd die jeweils größte Magnetfelderzeugung übernehmen. Dadurch kann eine thermische Belastung des Kurzstators 50 auf die Abschnitte 50A, 50B aufgeteilt, vorzugsweise vergleichmäßigt, werden.

Zweckmäßig kann der Kurzstator 50 mit dem Betriebsziel betrieben werden, eine Überbelastung eines Abschnitts oder aller Abschnitte 50A, 50B des Kurzstators 16 auszuschließen oder zumindest soweit wie möglich hinauszuzögern. Hierzu kann bspw. der Kurzstator 50 so betrieben werden, dass mindestens ein abschnittsspezifischer Parameter erfasst oder geschätzt und der Betrieb des Kurzstators 50 so angepasst wird, dass der Parameter einen Grenzwert nicht überschreitet. Beispiele für geeignete Parameter sind Abschnittstemperatur, Abschnittsleistungsabgabe, Abschnittswärmeerzeugung und/oder eine thermische Belastung des jeweiligen Abschnitts 50A, 50B.

Wie unter Bezugnahme auf die Figuren 1 bis 5 beschrieben, können die hierin offenbarten Techniken besonders bevorzugt bei Transportverfahren und Transportvorrichtungen für Behälter in einer Behälterbehandlungsanlage verwendet werden. Es wurde allerdings erkannt, dass die Techniken zum Erzielen der gleichen Vorteile auch in Verfahren und Vorrichtungen zum Transport anderer Gegenstände und Produkte eingesetzt werden können, solange zweckmäßig ein Antrieb der Transport-Bewegungsvorrichtungen mittels eines Linearmotorsystems, vorzugsweise eines Langstator- oder Kurzstator-Linearmotorsystems, erfolgt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

### Bezugszeichenliste

- 10: Vorrichtung zum Transportieren
- 12: Behälter
- 14: Transport-Bewegungsvorrichtung
- 16: Langstator
- 18: Langstatorsegment
- 20: Steuereinheit
- 22: Erste Führungsbahn
- 24: Zweite Führungsbahn
- 26: Erstes Führungselement
- 28: Zweites Führungselement
- 30: Drittes Führungselement
- 32: Viertes Führungselement
- 34: Halterung
- 36: Behälterbehandlungsanlage
- 38: Einlaufstern
- 40: Erste Behälterbehandlungsvorrichtung
- 42: Zweite Behälterbehandlungsvorrichtung
- 44: Auslaufstern
- 46: Vorbestimmter Funktionsbereich
- 46A-46F: Abschnitte
- 48: Vorrichtung zum Transportieren
- 50: Kurzstator
- 50A, 50B: Abschnitte
- 52: Permanentmagnete
- 54: Steuereinheit

## Patentansprüche

1. Verfahren zum Transportieren, vorzugsweise von Gegenständen, besonders bevorzugt von Behältern (12) oder Gebinden und/oder für eine Behälterbehandlungsanlage (36), aufweisend:
Bewegen mehrerer Transport-Bewegungsvorrichtungen (14) entlang einer Führungsbahn (22) mittels eines Linearmotorsystems, wobei ein Langstator (16) des Linearmotorsystems entlang eines Abschnitts der Führungsbahn (22) einen vorbestimmten Funktionsbereich aufweist, in dem eine dem vorbestimmten Funktionsbereich (46) zugeordnete Funktion bezüglich einer Beeinflussung der mehreren Transport-Bewegungsvorrichtungen (14) ausgeführt wird, und
abschnittsweises Variieren einer Magnetfelderzeugung des Langstators (16) innerhalb des vorbestimmten Funktionsbereichs (46) für einander nachfolgende Transport-Bewegungsvorrichtungen der mehreren Transport-Bewegungsvorrichtungen (14), sodass vorzugsweise eine thermische Belastung des Langstators (16) innerhalb des vorbestimmten Funktionsbereichs (46) zumindest abschnittsweise verringert wird.

2. Verfahren nach Anspruch 1, wobei:
der vorbestimmte Funktionsbereich (46) ein vorbestimmter Beschleunigungsbereich ist, in dem die mehreren Transport-Bewegungsvorrichtungen (14), vorzugsweise positiv oder negativ, beschleunigt werden; oder
der vorbestimmte Funktionsbereich (46) ein vorbestimmter Geschwindigkeits-Halte-Bereich ist, in dem die eine Geschwindigkeit der mehreren Transport-Bewegungsvorrichtungen (14) im Wesentlichen gehalten wird.

3. Verfahren nach Anspruch 1 oder Anspruch 2, wobei
die Magnetfelderzeugung derart abschnittsweise variiert wird, dass die dem vorbestimmten Funktionsbereich (46) zugeordnete Funktion beibehalten wird; und/oder
die Magnetfelderzeugung derart abschnittsweise variiert wird, dass eine thermische Belastung des Langstators (16) innerhalb des vorbestimmten Funktionsbereichs (46) verteilt wird, vorzugsweise im Wesentlichen gleichmäßig und/oder zwischen unterschiedlichen Abschnitten (46A-46F) des vorbestimmten Funktionsbereichs (46).

4. Verfahren nach einem der vorherigen Ansprüche, wobei der vorbestimmte Funktionsbereich (46) mehrere Abschnitte (46A-46F) aufweist und die Magnetfelderzeugung derart abschnittsweise variiert wird, dass mindestens eines der nachfolgenden Merkmale erfüllt ist:
eine Temperatur, eine Leistungsabgabe, eine Wärmeerzeugung und/oder eine thermische Belastung des Langstators (16) in den mehreren Abschnitten (46A-46F) jeweils unterhalb von einem Grenzwert bleibt;
eine Temperatur, eine Leistungsabgabe, eine Wärmeerzeugung und/oder eine thermische Belastung des Langstators (16) in den mehreren Abschnitten (46A-46F) zumindest teilweise vergleichmäßigt wird;
die mehreren Abschnitte (46A-46F) jeweils abwechselnd die größte Magnetfelderzeugung und/oder die kleinste Magnetfelderzeugung übernehmen;
die mehreren Abschnitte (46A-46F) jeweils abwechselnd die größte Leistungsabgabe und/oder die kleinste Leistungsabgabe aufweisen;
die Variation der Magnetfelderzeugung in den mehreren Abschnitten (46A-46F) wandert, vorzugweise rolliert und/oder abwechselnd sukzessive in einer Richtung zu einem Ende des vorbestimmten Funktionsbereichs (46) und in einer Richtung zu einem Anfang des vorbestimmten Funktionsbereichs (46) erfolgt; und
die Variation der Magnetfelderzeugung in den mehreren Abschnitten (46A-46F) in einer vorbestimmten Reihenfolge erfolgt.

5. Verfahren nach einem der vorherigen Ansprüche, wobei:
eine Geschwindigkeit der mehreren Transport-Bewegungsvorrichtungen (14) an einem Anfang des vorbestimmten Funktionsbereichs (46) im Wesentlichen gleich ist und/oder eine Geschwindigkeit der mehreren Transport-Bewegungsvorrichtungen (14) an einem Ende des vorbestimmten Funktionsbereichs (46) im Wesentlichen gleich ist.

6. Verfahren nach einem der vorherigen Ansprüche, wobei die Magnetfelderzeugung derart abschnittsweise variiert wird, dass:
die einander nachfolgendenden Transport-Bewegungsvorrichtungen (14) in jeweils unterschiedlichen Abschnitten (46A-46F) des vorbestimmten Funktionsbereichs (46) beschleunigt werden; und/oder
die einander nachfolgendenden Transport-Bewegungsvorrichtungen (14) deren jeweils stärkste Beschleunigung in jeweils unterschiedlichen Abschnitten (46A-46F) des vorbestimmten Funktionsbereichs (46) erfahren; und/oder
die einander nachfolgenden Transport-Bewegungsvorrichtungen (14) in dem vorbestimmten Funktionsbereich (46) zumindest teilweise unterschiedliche, wegbezogene Beschleunigungsprofile aufweisen.

7. Verfahren nach einem der vorherigen Ansprüche, wobei:
der vorbestimmte Funktionsbereich (46) durch mehrere, aufeinanderfolgende Langstatorsegmente (18) des Langstators (16) gebildet ist und jedes Langstatorsegment (18) einen jeweiligen Abschnitt des vorbestimmten Funktionsbereichs (46) bildet; und/oder
der vorbestimmte Funktionsbereich (46) ein für die mehreren Transport-Bewegungsvorrichtungen (14) gemeinsam vorbestimmter Funktionsbereich (46) ist; und/oder
der vorbestimmte Funktionsbereich (46) einen vorbestimmten Anfang, ein vorbestimmtes Ende, eine vorbestimmte Position, eine vorbestimmte Länge und/oder einen vorbestimmten Verlauf aufweist.

8. Verfahren nach einem der vorherigen Ansprüche, wobei:
die Magnetfelderzeugung derart abschnittsweise variiert wird, dass eine thermische Überbelastung eines Abschnitts oder aller Abschnitte (46A-46F) des Langstators (16) innerhalb des vorbestimmten Funktionsbereichs (46) hinausgezögert oder ausgeschlossen ist; und/oder
der vorbestimmte Funktionsbereich (46) eine erhöhte thermische Belastung und/oder einen erhöhten Leistungsbedarf aufgrund der Magnetfelderzeugung des Langstators (16) zur Wechselwirkung mit den mehreren Transport-Bewegungsvorrichtungen (14) aufweist.

9. Verfahren zum Transportieren, vorzugsweise von Gegenständen, besonders bevorzugt von Behältern (12) oder Gebinden und/oder für eine Behälterbehandlungsanlage (36), aufweisend:
Bewegen mindestens einer Transport-Bewegungsvorrichtung (14) entlang einer Führungsbahn (22) mittels eines Linearmotorsystems, wobei die mindestens eine Transport-Bewegungsvorrichtung (14) einen in mehrere Abschnitte (50A, 50B) unterteilten Kurzstator (50) des Linearmotorsystems aufweist; und
abschnittsweises Variieren einer Magnetfelderzeugung über die mehreren Abschnitte (50A, 50B) des Kurzstators (50) in aufeinanderfolgenden Zeiträumen zum Ausführen einer gleichen Funktion bezüglich des Bewegens der mindestens einen Transport-Bewegungsvorrichtung (14), sodass vorzugsweise eine thermische Belastung des Kurzstators (50) zumindest abschnittsweise verringert wird.

10. Verfahren nach Anspruch 9, wobei:
die gleiche Funktion eine, vorzugsweise positive oder negative, Beschleunigungsfunktion oder einer Geschwindigkeits-Halte-Funktion ist.

11. Verfahren nach Anspruch 9 oder Anspruch 10, wobei:
die mehreren Abschnitte (50A, 50B) des Kurzstators (50) unabhängig voneinander bestrombar oder bestromt sind.

12. Verfahren nach einem der Ansprüche 9 bis 11, wobei die mehreren Abschnitte einen ersten Abschnitt (50A) und einen zweiten Abschnitt (50B) aufweisen, und:
das abschnittsweise Variieren der Magnetfelderzeugung derart erfolgt, dass in aufeinanderfolgenden Zeiträumen zum Ausführen der gleichen Funktion zunächst der erste Abschnitt (50A) aktiviert und der zweite Abschnitt (50B) deaktiviert ist und später der erste Abschnitt (50A) deaktiviert und der zweite Abschnitt (50B) aktiviert ist; und/oder
das abschnittsweise Variieren der Magnetfelderzeugung derart erfolgt, dass in aufeinanderfolgenden Zeiträumen zum Ausführen der gleichen Funktion zunächst der erste Abschnitt (50A) stärker bestromt ist als der zweite Abschnitt (50B) und später der zweite Abschnitt (50B) stärker bestromt ist als der erste Abschnitt (50A).

13. Verfahren nach einem der Ansprüche 9 bis 12, wobei die Magnetfelderzeugung derart abschnittsweise variiert wird, dass mindestens eines der nachfolgenden Merkmale erfüllt ist:
eine thermische Belastung des Kurzstators (50) wird über die mehreren Abschnitte (50A, 50B) verteilt, vorzugsweise im Wesentlichen gleichmäßig;
eine Temperatur, eine Leistungsabgabe, eine Wärmeerzeugung und/oder eine thermische Belastung des Kurzstators (50) in den mehreren Abschnitten (50A, 50B) jeweils unterhalb von einem Grenzwert bleibt;
eine Temperatur, eine Leistungsabgabe, eine Wärmeerzeugung und/oder eine thermische Belastung des Kurzstators (50) in den mehreren Abschnitten (50A, 50B) zumindest teilweise vergleichmäßigt wird;
die mehreren Abschnitte (50A, 50B) jeweils abwechselnd die größte Magnetfelderzeugung und/oder die kleinste Magnetfelderzeugung übernehmen;
die mehreren Abschnitte (50A, 50B) jeweils abwechselnd die größte Leistungsabgabe und/oder die kleinste Leistungsabgabe aufweisen;
die Variation der Magnetfelderzeugung in den mehreren Abschnitten (50A, 50B) wandert, vorzugweise rolliert;
die Variation der Magnetfelderzeugung in den mehreren Abschnitten (50A, 50B) in einer vorbestimmten Reihenfolge erfolgt; und
eine thermische Überbelastung eines Abschnitts oder aller Abschnitte (50A, 50B) des Kurzstators (50) hinausgezögert oder ausgeschlossen ist.

14. Vorrichtung (10; 48) zum Transportieren, vorzugsweise von Gegenständen, besonders bevorzugt von Behältern (12) oder Gebinden und/oder für eine Behälterbehandlungsanlage (36), aufweisend:
eine Führungsbahn (22);
eine oder mehrere Transport-Bewegungsvorrichtungen (14), die entlang der Führungsbahn (22) führbar sind;
ein Linearmotorsystem aufweisend:
- einen Langstator (16), der entlang der Führungsbahn (22) angeordnet und zum Antreiben der mehreren Transport-Bewegungsvorrichtungen (14) ausgebildet ist; oder
- einen oder mehrere Kurzstatoren (50), der in der einen Transport-Bewegungsvorrichtung (14) oder die in den mehreren Transport-Bewegungsvorrichtungen (14) zum Antreiben entlang der Führungsbahn (22) umfasst sind; und
eine Steuereinheit (20; 54), die dazu eingerichtet ist, ein Verfahren nach einem der vorherigen Ansprüche auszuführen.

15. Verfahren oder Vorrichtung nach einem der vorherigen Ansprüche, wobei:
die eine oder die mehreren Transport-Bewegungsvorrichtung (14) eine Halterung (34) aufweist, die zum Halten eines Behälters (12) ausgebildet ist, wobei vorzugsweise die Halterung (34) als eine Behälterhals-Halterung oder eine Behältermantel-Halterung ausgeführt ist.
